# EUROPÄISCHE PATENTSCHRIFT

(11) **EP 0 748 485 B1**
(45) Veröffentlichungstag und Bekanntmachung des Hinweises auf die Patenterteilung: **14.11.2001**
(21) Anmeldenummer: 95910411.8
(22) Anmeldetag: 22.02.1995
(51) Int. Cl.: G06K 19/07

(54) **CHIPKARTE MIT MEHREREN MIKROKONTROLLERN**
MULTI-MICROPROCESSOR CHIP CARD
CARTE A PUCE A PLUSIEURS MICROCONTROLEURS

(30) Priorität: 02.03.1994 DE 4406704
(43) Veröffentlichungstag der Anmeldung: 18.12.1996
(73) Patentinhaber: CLM Combicard License Marketing GmbH & Co. KG, 21521 Dassendorf (DE)
(72) Erfinder: KREFT, Hans-Diedrich, D-21521 Dassendorf (DE)
(74) Vertreter: Mierswa, Klaus, Dipl.-Ing.
(86) Internationale Anmeldenummer: DE9500236
(87) Internationale Veröffentlichungsnummer: WO9524019

(56) Entgegenhaltungen:
- EP-A- 0 534 559
- DE-C- 3 935 364
- DE-U- 9 100 861
- DE-U- 9 302 042
- FR-A- 2 680 262
- NL-A- 9 301 540

## Beschreibung

### Technisches Gebiet:

Die Erfindung betrifft eine Chipkarte mit einem Mikrokontroller sowie Anschlüsse zum Datenaustausch mit einem Schreib/Lesegerät, wobei die Anschlüsse Kontaktanschlüsse und/oder kontaktlose Anschlüsse sind, die an eine Verbindungseinheit geführt sind, gemäß dem Oberbegriff des Anspruchs 1.

### Stand der Technik:

Es sind Plastikkarten als Chipkarten bekannt, welche kontaktfrei oder kontaktbehaftet mit Schreib/Lesegeräten Energie und Daten austauschen. Diese Karten werden für vielfache Anwendungen wie beispielsweise Telefonkarten, Gesundheitskarten oder Zutrittskontrollkarten eingesetzt. Eine Chipkarte dieser Art ist aus der DE 39 35 364 C1 bekannt.

Durch die DE 91 00 861.1 U1 ist eine Datenträgeraustauschanordnung bekannt geworden, die einen ersten Mikroprozessor mit ersten gemäß International Organisation for Standardisation (ISO-) Norm 7816-2 (Part 2) angeordneten Kontakten aufweist. Die Datenträgeraustauschanordnung besitzt mindestens einen zweiten Mikroprozessor mit zweiten Kontakten, deren Anordnung auf der Datenträgeraustauschanordnung nicht der ISO-Norm entspricht. Diese Datenträgeraustauschanordnung kann sowohl kontaktfreie als auch kontaktbehaftete Anschlüsse besitzen.

Durch die EP-A-0 554 164 ist eine Chipkarte mit einem Mikrokontroller mit Kontaktanschlüssen zum Datenaustausch mit einem Kartenleser gemäß mehreren unterschiedlichen Protokollen zur Kommunikation bekannt geworden. Die Chipkarte umfaßt mehrere Wandlerschaltkreise (CNV!,2,3), wobei jeder Wandlerschaltkreis dazu geeignet ist, die von der Karte vom Leser empfangenen elektrischen Signale gemäß einem festgelegten Protokoll in ausführbare Befehle umzuwandeln, wobei die unterschiedlichen Wandlerschaltkreise jeweils einem unterschiedlichen Kommunikationsprotokoll entsprechen. Des Weiteren ist ein Protokollwahlschaltkreis (CNVA) mit einem Hilfswandlerschaltkreis vorhanden, der spezielle von der Karte ausführbare Befehle erzeugt, die zur Auswahl eines der Wandlerschaltkreise dienen. Anschlüsse (CLK, I/O, RST, FUSE, PROG) der Karte sind an den Protokollwahlschaltkreis (CNVA) gelegt. Da die Anschlüsse physikalisch identisch ausgeführt sind, weil die Informationsübertragung auf logischer Codierung beruht, kann die Chipkarte nur an solchen Terminals genutzt werden, welche physikalisch mit gleichen Anschlüsse ausgestaltet sind oder welche physikalisch nur gleiche Informationen zur Verfügung stellen.

### Technische Aufgabe:

Der Erfindung liegt die Aufgabe zugrunde, unterschiedliche Kartenanwendungen, welche an einem Terminal (Schreib/Lesegerät) mit Karten gelöst werden, unterschiedlichen Mikrokontrollern auf der Chipkarte zuzuordnen.

### Offenbarung der Erfindung und deren Vorteile:

Die Lösung der Aufgabe wird erfindungsgemäß dadurch gelöst, daß die Chipkarte mehrere Mikrokontroller aufweist, die separat ansteuerbar sind, wobei die Verbindungseinheit anhand der an einem der Anschlüsse anliegenden Informationen oder anhand der physikalischen Ausgestaltung der Anschlüsse entscheidet, welcher der Mikrokontroller mit dem Schreib/Lesegerät in Datenaustausch treten soll, wobei die Verbindungseinheit anschließend eine Verbindung zum Datenaustausch zwischen den Anschlüssen und dem jeweils ausgewählten Mikrokontroller durchschaltet.

In vorteilhafter Weise ist die Verbindungseinheit entweder ein separates elektronisches Bauteil oder in einem Mikrokontroller herkömmlicher Bauart integriert. Des weiteren erkennt die Verbindungseinheit anhand der physikalischen Ausgestaltung der Kontaktanschlüsse und/oder der kontaktlosen Anschlüsse, welcher der Mikrokontroller in Datenaustausch mit dem Schreib/Lesegerät treten soll.

Die Auswertung der physikalischen Ausgestaltung der Kontaktanschlüsse und/oder der kontaktlosen Anschlüsse kann durch Signalgebung von ungenutzten Kontakten auf der Chipkarte erfolgen.

Die Verbindungseinheit, die als Combi interface Chip (CIC) bezeichnet werden kann, ist vorteilhafterweise ein Bauteil, welches ergänzend zu einem Mikrokontroller auf Chipkarten oder mit seinen patentgemäßen Funktionen integriert in einem herkömmlichen Kartenkontroller eingesetzt werden kann. In vorteilhafter Weise ist es durch die Verbindungseinheit möglich, eine Chipkarte in einem Terminal in einer Anwendung A, welche den Mikrokontroller A benötigt, auch in einem Terminal einer Anwendung B einzusetzen, welche den Mikrokontroller B benötigt.

Kurzbeschreibung der Zeichnung, in der zeigen:
- Figur 1: schematisch unterschiedliche Anschlüsse 1,2,3 zu Schreib/ Lesegeräten außerhalb der Chipkarte, bei der die Verbindungseinheit direkt auf dem Chip eines Mikrokontrollers untergebracht ist und
- Figur 2: eine weitere Ausgestaltung einer Verbindungseinheit in nicht integrierter Form, wobei Kontaktflächen vorhanden sind, die den Anschluß eines ersten Mikrokontrollers und eines zweiten Mikrokontrollers ermöglichen.

### Wege zur Ausführung der Erfindung:

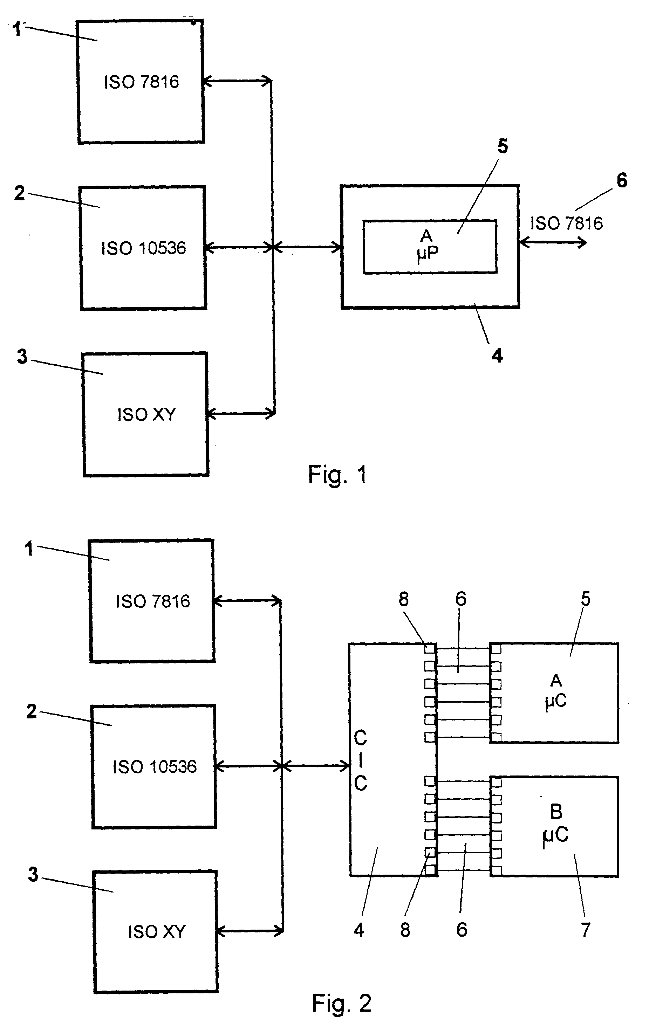

Figur 1 zeigt schematisch die unterschiedlichen Anschlüsse 1,2,3 zu Schreib/Lesegeräten außerhalb der Karte. Diese werden in ihrer unterschiedlichen physikalischen Ausgestaltung an eine Verbindungseinheit 4 geführt. Die Verbindungseinheit 4 stellt die unterschiedlichen Anschlüsse 1,2,3 in einer einheitlichen Verbindung 6 für den Anschluß weiterer Chips zur Verfügung. Die Verbindungseinheit 4 ist direkt auf dem Chip eines Mikrokontrollers 5 (AµP) untergebracht (integrierte Lösung).

Die Verbindungseinheit 4 hat aufgrund der physikalischen Ausgestaltung der Anschlüsse oder der Informationen, welche an den Anschlüssen zu einem Schreib/Lesegerät liegen, zu entscheiden, welcher Mikrokontroller auf der Karte genutzt wird. Ist beispielsweise aus der vom Schreib/Lesegerät einlaufenden Information erkennbar, daß nicht der Mikrorechner A für die infrage kommende Aufgabe vorgesehen ist, wird die Verbindung der einlaufenden Information von diesem Mikrokontroller umgeschaltet zu einer weiteren Verbindung 6, welche für einen anderen Mikrokontroller zur Verfügung steht. Die Auswertung der einlaufenden Information kann durch eine Software in der Verbindungseinheit 4 - bei Ausführung der Verbindungseinheit 4 als Mikrorechner - oder durch eine festverdrahtete Logik auf der Verbindungseinheit 4 erfolgen.

Figur 2 zeigt eine weitere Ausgestaltung einer Verbindungseinheit 4, wie in Fig. 1, jedoch in einer nicht integrierten Form. Zusätzlich sind Kontaktflächen 8 erkennbar, die den Anschluß eines ersten Mikrokontrollers 5 (AµC) und eines zweiten Mikrokontrollers 7 (BµC) ermöglichen.

Die Funktion der Verbindungseinheit 4 kann als separates Bauteil auf einer Chipkarte erfolgen, wobei Kontakte 8 zur Verfügung stehen. Die Funktion kann aber auch in einem Mikrokontroller 5 integriert sein, so daß dieser Mikrokontroller 5 auch die Auswertung der Information von den Schreib/ Lesegeräten übernehmen kann.

Die physikalische Ausgestaltung der Anschlüsse 1,2,3 läßt auch eine Entscheidung zu, welcher Mikrokontroller 5, 7 genutzt werden soll. Sind beispielsweise Spulen oder Kondensatorflächen für eine kontaktfreie Übertragung aktiviert, kann ebenfalls auf eine bestimmte Verbindung 6 umgeschaltet werden.

Kontaktkartenfelder auf Karten nach ISO-Norm 7816 und in Schreib/Lesegeräten haben teilweise ungenutzte Kontaktanschlüsse. In vorteilhafter Weise können diese ungenutzten Kontaktanschlüsse durch eine physikalische Signalauswertung für eine Erkennung der Anwendung und damit für die Umschaltung innerhalb der Verbindungseinheit 4 genutzt werden. In den Schreib/Lesegeräten ist hierzu beispielsweise eine Spannung auf die Kontaktanschlüsse zu legen.

### Gewerbliche Anwendbarkeit:

Der Gegenstand der Erfindung ist für Chipkarten, insbesondere Plastikkarten, zum Datenaustausch innerhalb von Schreib/Lesegeräten anwendbar. Derartige Chipkarten, welche kontaktfrei oder kontaktbehaftet mit Schreib/ Lesegeräten Energie und Daten austauschen können, werden vorteilhaft für Telefonkarten, Gesundheitskarten oder Zutrittskontrollkarten eingesetzt.

## Patentansprüche

1. Chipkarte mit einem Mikrokontroller sowie Anschlüsse (1,2,3) zum Datenaustausch mit einem Schreib/Lesegerät, wobei die Anschlüsse (1,2,3) Kontaktanschlüsse und/oder kontaktlose Anschlüsse sind, die an eine Verbindungseinheit (4) gerührt sind,
**dadurch gekennzeichnet,**
**daß** die Chipkarte mehrere Mirkrokontroller (5,7) aufweist, die separat ansteuerbar sind, wobei die Verbindungseinheit (4) anhand der an einem der Anschlüsse (1,2,3) anliegenden Informationen oder anhand der physikalischen Ausgestaltung der Anschlüsse (1,2,3) entscheidet, welcher der Mikrokontroller (5,7) mit dem Schreib/Lesegerät in Datenaustausch treten soll, wobei die Verbindungseinheit (4) anschließend eine Verbindung (6) zum Datenaustausch zwischen den Anschlüssen (1,2,3) und dem jeweils ausgewählten Mikrokontroller (5,7) durchschaltet.

2. Chipkarte nach Anspruch 1, **dadurch gekennzeichnet,**
**daß** die Verbindungseinheit (4) entweder ein separates elektronisches Bauteil oder in einem Mikrokontroller (5,7) herkömmlicher Bauart integriert ist.

3. Chipkarte nach Anspruch 1 oder 2, **dadurch gekennzeichnet,**
**daß** die Auswertung der physikalischen Ausgestaltung der Kontaktanschlüsse und/oder der kontaktlosen Anschlüsse (1,2,3) durch Signal-gebung von ungenutzten Kontakten auf der Chipkarte erfolgen.

## Claims

1. A chip card with a microprocessor as well as connections (1, 2, 3) for data exchange with a read/write device, whereby the connections (1, 2, 3) are contact connections and/or contact-free connections that are run to a connection unit (4),
**characterized in that**
the chip card has several microprocessors (5, 7) which can be actuated separately, whereby the connection unit (4) decides on the basis of the information present at one of the connections (1, 2, 3) or on the basis of the physical configuration of the connections (1, 2, 3) which of the microprocessors (5, 7) should enter into data exchange with the read/write device, whereby the connection unit (4) subsequently establishes a connection (6) for data exchange between the connections (1, 2, 3) and the specifically selected microprocessor (5, 7).

2. The chip card according to Claim 1, **characterized in that**
the connection unit (4) is either a separate electronic component or else it is integrated into a microprocessor (5, 7) of a conventional type.

3. The chip card according to Claim 1 or 2, **characterized in that**
the evaluation of the physical configuration of the contact connections and/or of the contact-free connections (1, 2, 3) is performed through signal generation by unused contacts on the chip card.

## Revendications

1. Carte à puce comportant un microcontrôleur ainsi que des connexions (1,2,3) servant à l'échange de données avec une station de lecture/écriture, les connexions (1,2,3 étant à contact et/ou sans contact et étant conduites vers une unité de jonction (4),
**caractérisée en ce que** la carte à puce présente plusieurs microcontrôleurs (5,7) pouvant être activés séparément, l'unité de jonction (4) sélectionnant, en raison des l'informations présentes à l'une des connexions (1,2,3) ou en raison de la réalisation physique des connexions (1,2,3), le microcontrôleur respectif (5,7) qui doit entrer en échange de données avec la station de lecture/écriture, l'unité de jonction (4) établissant ensuite une liaison (6) pour l'échange de données entre les connexions (1,2,3) et le microcontrôleur (5,7) sélectionné.

2. Carte à puce selon la revendication 1,
**caractérisée en ce que** l'unité de jonction (4) est ou un composant électronique séparé ou est intégrée dans un microcontrôleur (5,7) de type conventionnel.

3. Carte à puce selon l'une quelconque des revendications 1 ou 2,
**caractérisée en ce que** l'évaluation de la réalisation physique des connexions à contact et/ou des connexions sans contact (1,2,3) par des signaux émis par des contacts non utilisés sur la carte à puce.
